# EUROPÄISCHE PATENTANMELDUNG

(11) **EP 1 057 661 A1**
(43) Veröffentlichungstag der Anmeldung: **06.12.2000**
(21) Anmeldenummer: 99110084.3
(22) Anmeldetag: 22.05.1999
(51) Int. Cl.: B60C 11/16, B60C 5/22, B60C 17/01, B60C 19/12

(54) **Fahrzeugrad**

(71) Anmelder: Bach, Gottfried, 06108 Halle/Saale (DE)
(72) Erfinder: Bach, Gottfried, 06108 Halle/Saale (DE)

(57) **Zusammenfassung**

Die Erfindung bezieht sich auf ein gas- bzw. luftbereiftes Fahrzeugrad mit einer starren Felge (1), das einen Reifen aufweist, der aus zwei Druckkammern besteht, die unterschiedliche Betriebsdruckverhältnisse zulassen (Fig. 1). Es besteht eine innere (5) und eine äußere Druckkammer (8), wobei die innere als Stützwand (10) ausgebildete Druckkammer durch ein Dehnelement (12) die Eigenschaft aufweist, sich in Richtung Unterseite der Lauffläche des Reifens auszudehnen. Wird der Druck der inneren Druckkammer (5) gegenüber der äußeren Druckkammer (8) durch ein vorgesehenes Ventil (6) erhöht, dehnt sich die innere Druckkammer (5) unterhalb der Lauffläche des Reifens in der Weise aus, daß die in der Lauffläche des Reifens eingearbeiteten Profilzusatzelemente (9), z.B. Spikes, Metallkrallen o.ä., in die Lauffläche eingedrückt werden, daß sie die Lauffläche überragen (Fig. 2). Auf diese Weise können z.B. vereiste oder sonst erschwerte Fahrbahnbedingungen wie mit einem mit Spikes oder Schneeketten versehenen Reifen überwunden werden. Durch entsprechende Vorrichtungen kann das Zweikammersystem mit Anti-Schlupf-Einrichtungen, ETS oder ADS automatisch gekoppelt werden. Die gleiche Wirkung tritt ein, soweit sich der Druck der äußeren Druckkammer (8) gegenüber der inneren Druckkammer (5) über das Ventil (7) vermindert, deren Druck konstant bleibt (Fig. 3). Bei einem starken Druckabfall der äußeren Druckkammer (8) - z.B. durch Beschädigung des Reifens -, und bei gleichzeitig stabilem Druck der inneren Druckkammer (5), bleibt die Lauffähigkeit des Fahrzeugrades durch die Stützwand (10) der inneren Druckkammer (5) als Notlaufsystem erhalten, wenn auch eingeschränkt.

## Beschreibung

Die Erfindung bezieht sich auf ein gas- bzw. luftbereiftes Fahrzeugrad, das im wesentlichen aus einer starren Felge besteht, auf die ein mit Gas bzw. Luft aufblasbarer Fahrzeugreifen aufgezogen wird, der im wesentlichen aus Gummi oder gummiähnlichen Kunststoffen besteht, mit eingearbeiteter Karkasse aus textilen und/oder metallischen Festigkeitsträgern und deren Oberfläche mit elastischen Eingriffen beziehungsweise nachgiebigem Reifenprofil ausgestattet ist.

Im Inneren des Reifens befindet sich eine aus Gummi- bzw. gummiähnlichen Kunststoffen bestehende und innwandig verstärkte innere Druckkammer, die mit dem Reifen ein Zweikammer-Gas- bzw. luftbefülltes System bildet (Zwei- oder Mehrkammersystem), die sich an die innenwand des Reifenprofils anschmiegt, die so elastisch ist, daß durch Veränderung der Drucksysteme untereinander systemimmanente Profilveränderungen des Reifens herbeigeführt werden können.

Nach dem bisher bekannten Stand der Technik sind vereinzelt Reifentypen bekannt, die Notlaufeigenschaften aufweisen (z. B. Patentveröffentlichungen 0140074; 0148338 und Conti-Pannenlaufsystem), jedoch sind keine Reifen bekannt die nach ihrer Bauart systemimmanente Profilveränderungen zwecks Anpassung an unterschiedliche Fahrbahnbedingungen zulassen.

Der Erfindung liegt demgemäß die Aufgabe zugrunde, ein Fahrzeugrad aufzuzeigen, das
- bei Reifendruckverlust eine schädigungsfreie und zuver lässige Notlauffähigkeit ermöglicht,
   geeignete und systemimmanente Profilanpassungen bzw. Laufflächenveränderungen zuläßt die eine Anpassung an veränderte bzw. erschwerte Fahrbahnbedingungen herbeiführt. Hierbei ist insbesondere an vereiste bzw. verschneite Fahrbahnen, Steigungen, Gefälle oder Sandpisten zu denken bzw. stehendes Wasser auf Fahrbahnen (Aquaplaning).
   Je nach dem Stand der Technik kann das System mit anderen modernen Systemen (z.B. Antriebs-Schlupf-System, ETS und ADS ) gekoppelt werden.

### B.

Die Aufgabe wird erfindungsgemäß durch folgende
**Patentansprüche**
gelöst, wobei die vorteilhaften Ausbildungen der Erfindung in den Ansprüchen 1 bis 15 aufgeführt sind:
a) Im folgenden wird die Erfindung anhand von Zeichnungen näher erläutert. Die Ausführungsbeispiele sind im einzelnen wie folgt festgehalten:
   - Figur 1:: Querschnitt durch ein erfindungsgemäßes Fahrzeugrad im Normalzustand
   - Figur 2:: Querschnitt durch ein erfindungsgemäßes Fahrzeugrad bei Erhöhung der Druckverhältnisse der inneren Druckkammem

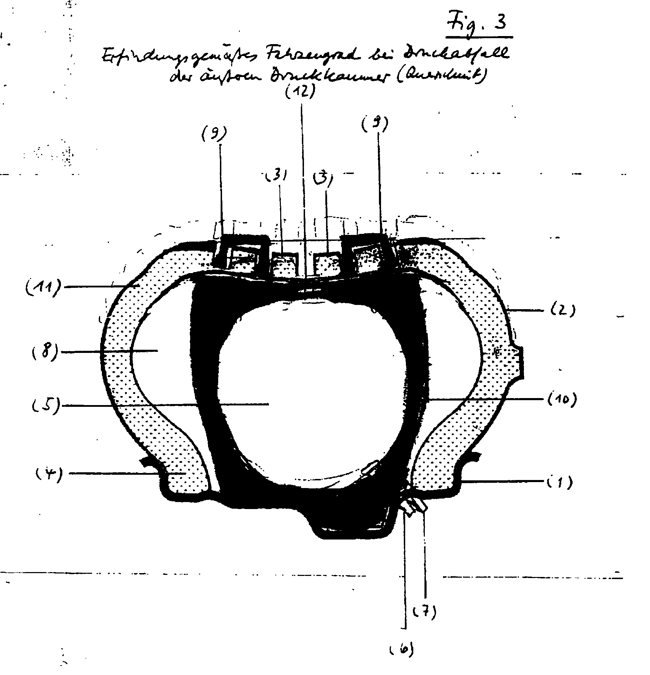

   - Figur 3:: Querschnitt durch ein erfindungsgemäßes Fahrzeugrad bei Druckabfall der äußeren Druckkammer
   - Zeichnungslegende zu Figur 1:: Teilquerschnitt eines Rades im Normalzustand;
   - Zeichungslegende zur Figur 2:: Teilquerschnitt eines Rades im veränderten Zustand;
   - Zeichnungslegende zur Figur 3:: Teilquerschitt eines Rades in Notlaufposition.

   (1) Teilquerschnitt einer Radfelge
   (2) Reifenaußenwand
   (3) Profilausbildungen
   (4) Reifenflanken, mit Kunststoff- und/oder Stahlgeflecht verstärkt
   (5) Innere Druckkammer
   (6) Ventil für innere Druckkammer
   (7) Ventil für äußere Druckkammer
   (8) äußere Druckkammern
   (9) Profilzusatzelemente
   (10) Stützwand
   (11) Reifenflanken
   (12) Dehnelement

## Patentansprüche

1. die ein mit Gas bzw. Luft aufblasbarer Fahrzeugreifen aufgezogen und dadurch gekennzeichnet ist, daß zwischen der Felge (1) und der Profilinnenseite des Reifens eine mit einem Dehnelement (12) ausgestattete und aufblasbare innere Druckkammer (5) eingebracht ist (hier als Zweikammersystem), die Profilzusatzelemente (9) zur Veränderung der Haftungseigenschaften des Fahrzeugreifens hervortreten läßt.

2. Gasbereiftes Fahrzeugrad nach Anspruch 1., welches dadurch gekennzeichnet ist, daß die der Profilinnenseite zugewandte Seite der inneren Druckammer (5) aus einem für spitze Gegenstände wie Nägel, Glasscherben etc. nicht durchdringbaren Material besteht.

3. Gasbereiftes Fahrzeugrad nach Anspruch 2., welches dadurch gekennzeichnet ist, daß das Material aus Metall, Tavlar, Polyurithan o.ä. besteht.

4. Gasbereiftes Fahrzeugrad nach Anspruch 1., welches dadurch gekennzeichnet ist, daß die innere Druckkammer von der Felgenseite aus gesehen durch eine starre, druckunabhängige und der der Lauffläche entsprechenden Reifenform angepaßte Stützwand (10) begrenzt wird.

5. Gasbereiftes Fahrzeugrad nach Anspruch 1., welches dadurch gekennzeichnet ist, daß auf der Felgeninnenseite an der Felge ein für die innere Druckkammer vorgesehenes Ventil (6) angebracht ist.

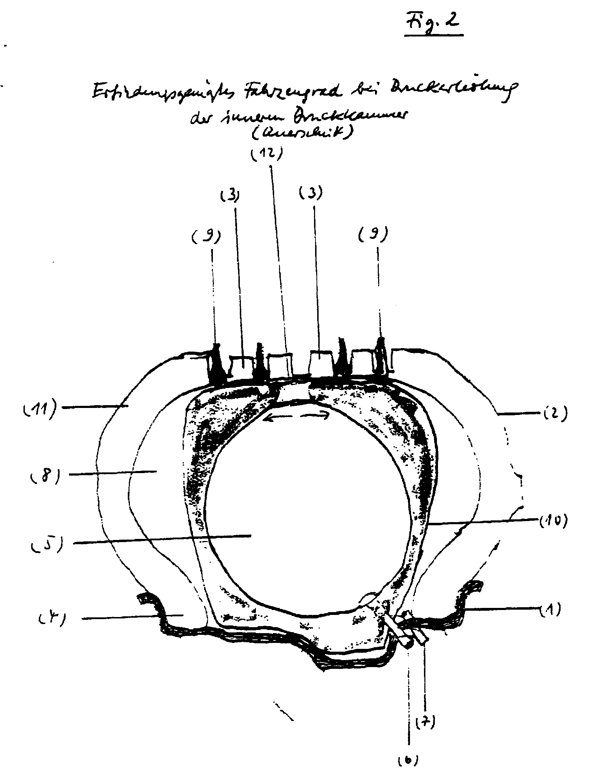

6. Gasbereiftes Fahrzeug nach Anspruch 4., welches dadurch gekennzeichnet ist, daß sich die Kammer beim Aufblasen in Richtung Reifenprofilunterseite (von innen nach außen) ausdehnt, so daß sich die Lauffläche des Reifens durch eingearbeitete Profilzusatzelemente (9) verändert (Figur 2).

7. Gasbereiftes Fahrzeugrad nach Anspruch 1., welches dadurch gekennzeichnet ist, daß die innere Druckkammer (5) eine Verstärkung, z. B. aus Stahl, Gewebe, Glasfaser, Draht oder dergleichen aufweist.

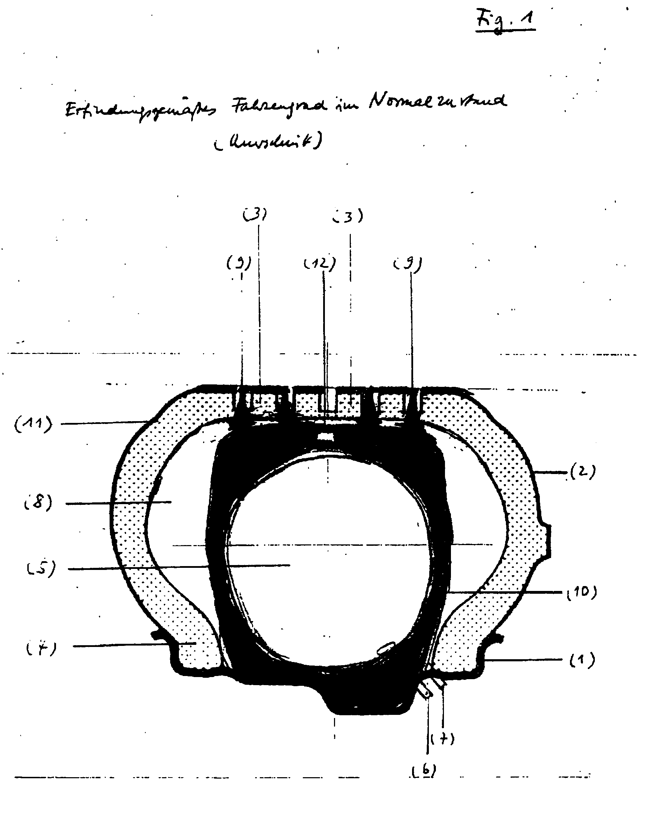

8. Gasbereiftes Fahrzeugrad nach Anspruch 7., welches dadurch gekennzeichnet ist, daß die innere Druckkammer (5) bei Druckminderung oder Drucklosstellung die Lauffläche des Reifens wieder in den Normalzustand versetzt (Figur 1) oder die gleiche Wirkung ggf. durch Druckerhöhung er äußeren DruckKammer (8) herbeigführt wird.

9. Gasbereiftes Fahrzeugrad nach einem der Ansprüche 1 bis 8, welches dadurch gekennzeichnet ist daß die innere Druckkammer (5) ein Stützschlauch und/ oder Stützmantel ist.

10. Gasbereiftes Fahrzeugrad nach Anspruch 9., welches dadurch gekennzeichnet ist, daß die Profilzusatzelemente (9) im wesentlichen im Bereich zwischen den Profilvertiefungen und/ oder ggf. überkragend auf der Lauffläche oder direkt auf der Lauffläche angeordnet sind.

11. Gasbereiftes Fahrzeugrad nach einem der Ansprüche 1. bis 10., welches dadurch gekennzeichnet ist, daß die Profilinnenseite und/ oder Profiloberfläche durch die innere Druckkammer (5) verformbar ist.

12. Gasbereiftes Fahrzeugrad nach einem der Ansprüche 1. bis 11., welches dadurch gekennzeichnet ist, daß im Bereich der Profilzusatzelemente (9) eine haftungsertöhende bzw. der Fahrbahn angepaßte Wirkung eintritt.

13. Gasbereiftes Fahrzeugrad nach Anspruch 1. bis 3., welches dadurch gekennzeichnet ist, daß die Profilzusatzelemente Spikes und/ oder Profileinsätze und/ oder Ketteneinsätze oder dergleichen sein können.

14. Gasbereiftes Fahrzeugrad nach einem der vorhergehenden Ansprüche, welches dadurch gekennzeichnet ist, daß durch Aufblasen, bzw. Drucklosstellung und/ oder Druckminderung der inneren Druckkammer die Reifenform gestreckt und/ oder die Profilzusatzelemente (9) aus ihrer Ruhestellung in ihre Arbeitsstellung bewegt werden.

15. Gasbereiftes Fahrzeugrad nach einem der vorhergehen den Ansprüche, welches dadurch gekennzeichnet ist, daß die innere Druckkammer (5) an ihrem der Felgenseite zugewandten Ende durch einen oder mehrere Gasvorratsbehälter bzw. Ventile (6) steuerbare Luftzuführungs- bzw. Luftabführungsleitungen aufweist.

## Geänderte Patentansprüche

### Geänderte Patentansprüche gemäss Regel 86(2) EPÜ.

1. die ein mit Gas bzw. Luft aufblasbarer Fahrzeugreifen aufgezogen und dadurch gekennzeichnet ist, daß zwischen der Felge (1) und der Profilinnenseite des Reifens eine mit einem Dehnelement (12) ausgestattete und aufblasbare innere Druckkammer (5) eingebracht ist (hier als Zweikammersystem), die Profilzusatzelemente (9) zur Veränderung der Haftungseigenschaften des Fahrzeugreifens hervortreten läßt.
2. Gasbereiftes Fahrzeugrad nach Anspruch 1., welches dadurch gekennzeichnet ist, daß die der Profilinnenseite Zugewandte Seite der inneren Druckammer (5) aus einem für spitze Gegenstände wie Nägel, Glasscherben etc. nicht durchdringbaren Material besteht.
3. Gasbereiftes Fahrzeugrad nach Anspruch 2., welches dadurch gekennzeichnet ist, daß das Material aus Metall, Tavlar, Polyurithan o.ä. besteht.
4. Gasbereiftes Fahrzeugrad nach Anspruch 1., welches dadurch gekennzeichnet ist, daß die innere Druckkammer von der Felgenseite aus gesehen durch eine starre, druckunabhängige und der der Lauffläche entsprechenden Reifenform angepaßte Stützwand (10) begrenzt wird.
5. Gasbereiftes Fahrzeugrad nach Anspruch 1., welches dadurch gekennzeichnet ist, daß auf der Felgerinnenseite an der Felge ein für die innere Druckkammer vorgesehenes Ventil (6) angebracht ist.
6. Gasbereiftes Fahrzeug nach Anspruch 4., welches dadurch gekennzeichnet ist, daß sich die Kammer beim Aufblasen in Richtung Reifenprofilunterseite (von innen nach außen) ausdehnt so daß sich die Lauffläche des Reifens durch eingearbeitete Profilzusatzelemente (9) verändert (Figur 2).
7. Gasbereiftes Fahrzeugrad nach Anspruch 1., welches dadurch gekennzeichnet ist, daß die innere Druckkammer (5) eine Verstärkung, z. B. aus Stahl, Gewebe, Glasfaser, Draht oder dergleichen aufweist.
8. Gasbereiftes Fahrzeugrad nach Anspruch 7., welches dadurch gekennzeichnet ist, daß die innere Druckkammer (5) bei Druckminderung oder Drucklosstellung die Lauffläche des Reifens wieder in den Normalzustand versetzt (Figur 1) oder die gleiche Wirkung ggf. durch Druckerhöhung er äußeren Druckkammer (8) herbeigführt wird.
9. Gasbereiftes Fahrzeugrad nach einem der Ansprüche 1 bis 8, welches dadurch gekennzeichnet ist, daß die innere Druckkammer (5) ein Stützschlauch und/ oder Stützmantel ist.
10. Gasbereiftes Fahrzeugrad nach Anspruch 9., welches dadurch gekennzeichnet ist, daß die Profilzusatzelemente (9) im wesentlichen im Bereich zwischen den Profilvertiefungen und/ oder ggf. überkragend auf der Lauffläche oder direkt auf der Lauffläche angeordnet sind.
11. Gasbereiftes Fahrzeugrad nach einem der Ansprüche 1. bis 10., welches dadurch gekennzeichnet ist, daß die Profilinnenseite und/ oder Profiloberfläche durch die innere Druckkammer (5) verformbar ist.
12. Gasbereiftes Fahrzeugrad nach einem der Ansprüche 1. bis 11., welches dadurch gekennzeichnet ist, daß im Bereich der Profilzusatzelemente (9) eine haftungserhöhende bzw. der Fahrbahn angepaßte Wirkung eintritt.
13. Gasbereiftes Fahrzeugrad nach Anspruch 1. bis 3.,welches dadurch gekennzeichnet ist, daß die Profilzusatzelemente Spikes und/ oder Profileinsätze und/ oder Ketteneinsätze oder dergleichen sein können.
14. Gasbereiftes Fahrzeugrad nach einem der vorhergehenden Ansprüche, welches dadurch gekennzeichnet ist, daß durch Aufblasen, bzw. Drucklosstellung und/ oder Druckminderung der inneren Druckkammer die Reifenform gestreckt und/ oder die Profilzusatzelemente (9) aus ihrer Ruhestellung in ihre Arbeitsstellung bewegt werden.
15. Gasbereiftes Fahrzeugrad nach einem der vorhergehen den Ansprüche, welches dadurch gekennzeichnet ist, dab die innere Druckkammer (5) an ihrem der Felgenseite zugewandten Ende durch einen oder mehrere Gasvorratsbehälter bzw. Ventile (6) steuerbare Luftzuführungs- bzw. Luftabführungsleitungen aufweist.
